# EUROPEAN PATENT APPLICATION

(11) **EP 1 830 246 A1**
(43) Date of publication of application: **05.09.2007**
(21) Application number: 06004120.9
(22) Date of filing: 01.03.2006
(51) Int. Cl.: G06F 3/033

(54) **Device and system for presenting information**

(71) Applicant: STMicroelectronics (Research & Development) Limited, Marlow, Buckinghamshire SL7 1YL (GB)
(72) Inventor: Raynor, Jeffrey, Edinburgh EH12 5HZ (GB)
(74) Representative: Anderson, Angela Mary

(57) **Abstract**

The present invention discloses a device and a system for presenting an electronic document stored on a computer. The system is a video presenting system connected to a computer. The system comprises a detecting device for detecting information displayed on the display medium by an input device like a laser pointer for instance. The input device and the detecting device allow the user to present information remotely from the computer. So the user being near the display medium can efficiently comment on the electronic document even if the distance between the user and the computer is more than two meters for instance.

## Description

The present invention is directed to remotely controlling a computer and more particularly to a device to detect specific information and to make this information being interpreted by a computer.

It is well known for a user to use a video presenting system for a user to present to an audience an electronic document stored on a computer. This type of presenting system generally comprises a projector linked to computer or a laptop. Generally the computer or projector is in one location and the projector screen is in a different location. The user will use a peripheral to assist him presenting the document or presentation on the projector screen. The peripherals allow the user to effect certain actions on the document being projected. For example, the user can enter the menu of the application managing the document and select an available function to go to the next slide of the document or to click on a link displayed in the document to close the document or other kinds of similar functions.

There are many known peripherals used to make selections and point out information in the environment of presentation as described above. These include:
- a conventional mouse
- a wireless mouse
- a gyroscopic mouse
- a pointer.

Each of these peripherals fails to provide an ideal solution to the problems encountered when a user makes a presentation in a large venue and where the data being presented on the projector screen is stored remotely (for example on a computer).

Accordingly, there exists a need for a mean for allowing a user to overcome the problems identified and it is one object of the present invention to overcome at least some of the problems.

The invention has an advantage that the image capturing device can detect a mark sent by an input device on the distant screen and provide the computer with a relevant location information to effect an action related to both the location information and an action required by the user.

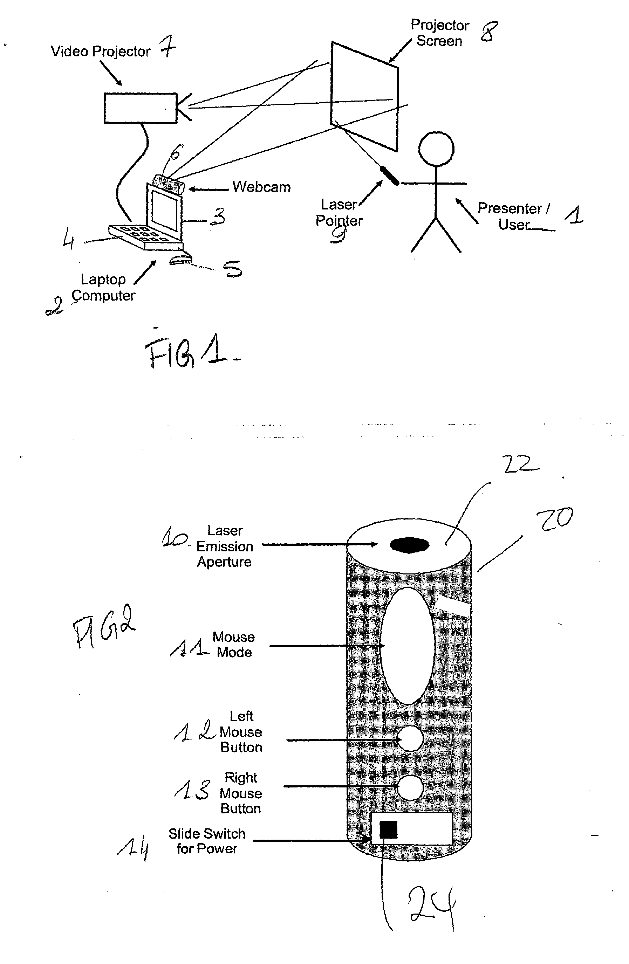

The figure 1 discloses a system remotely presenting data like such as a presentation for example by a user 1 of an electronic document for instance. This system comprises a number of different devices, including a computer 2. The computer can be a personal computer, a laptop or any other suitable device such as a personal digital assistant. In the following description any such suitable device will be known as a computer.

The computer is able to operate with any applications such as Word, Excel, PowerPoint, a web browser such as Firefox or Mozilla, a drawing package such as

Corel Draw, AutoCAD, a media player such as Win Amp or other office package

such as Open Office etc and has means for storing documents and data for the application. In addition, the computer can manage other types of application such as drivers for the peripherals.

The computer may also include other elements such as a screen 3, a keyboard 4, a mouse 5. When the mouse 5 or the keyboard 4 is used, a cursor is visible on the computer screen 3 in the document displayed on the screen 3. The computer can also comprise a web cam 6 or other appropriate image capture device can be part of the computer or connected from externally. The web cam or computer may comprise software for dealing with images. The web cam may be located near or on the computer in order to view and record anything in any direction. Thus the web cam can view a user in front of the screen, or anything around the computer.

The computer is also connected to a video projecting system 7 which allows the computer to project images from the computer screen to a projector screen 8. Thus the images can be remotely seen on the screen. The screen may not actually exist as the function may be effected by a wall or any other surface.

User 1 stands between the computer and the distant screen but generally is closer to the screen 8 so that the user can give the presentation. The user comments on the presentation displayed on the screen and uses an input device 9 to indicate specific locations on the screen 8. The user can also use the input device 9 to operate the computer 2 as we will describe in greater detail below.

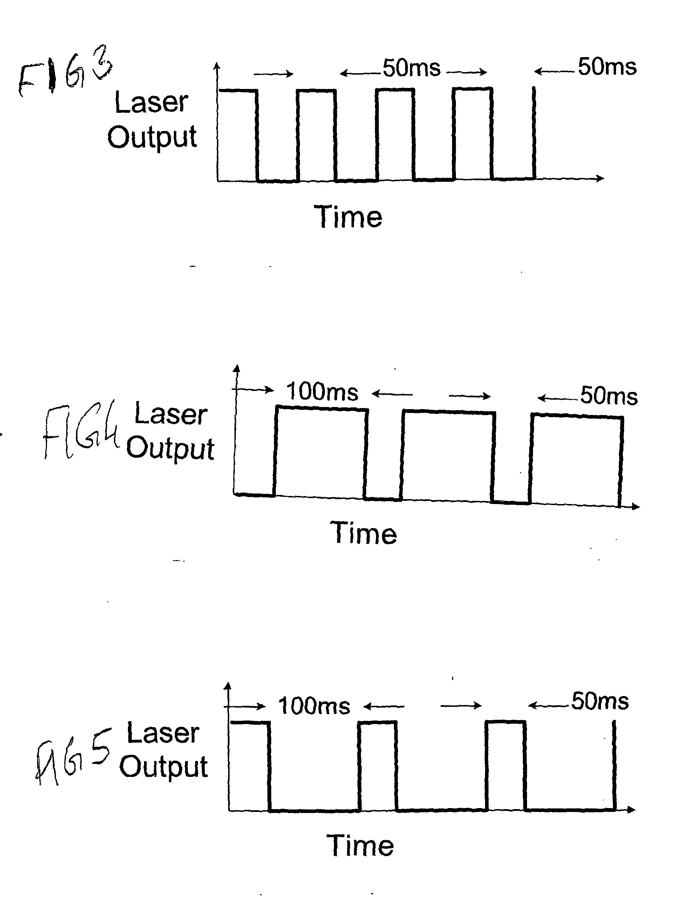

Referring now to figure 2, the input device is shown in more details. It has a cylindrical form 20 of a length of approximately 10 to 20 centimeters or similar form which fits comfortably in the user's hand. An aperture 10 is made on the circular surface 22. This aperture provides the output for a signal, for example it can be a laser beam or another output. The output signal has several distinctive characteristics, for example a specific type modulation or frequency or form. The output can be pointed at the screen 8 and is visible thereon. The input device includes other input and other output means which may be of appropriate type of example buttons 11, 12 and 13, each for a different function. The first button, 11 has an elliptic form. It is advantageous for the first button, 11 to have a form readily identifiable from the other buttons. This button has a similar function to that of a prior-art laser pointer, i.e. provides a beam to illuminate a part of the screen. In this invention, it also allows the user to launch a mouse mode which sets the input device as a pointer.

The second button, 12 and the third button, 13 have the same roles as the left and right buttons of a conventional mouse. These buttons can launch action by clicking on any icon or any entry in a menu of the application being used. The third button can launch the contextual menu which includes subentries of menu entries for example cut or paste functions. Other functions are available depending the type of application used. At the end of the cylindrical form a fourth button, 14 is located and includes a slider 24 on the surface which can slide from left to right to switch on or off the input device. The fourth button, 14 is an optional button. The following represents how the system operates. A user is remotely presenting a presentation which is displayed on the distant screen 8. The user clicks on the mouse mode button 11 of the input device and a laser beam is output through the aperture 10 of the input device. This beam may correspond with a point which is displayed on the image on the distant screen. The location of the point depends on the orientation of the input device. The laser beam is temporarily modulated as shown in figure 3. The frequency of modulation is of the order of 10Hz to 100Hz. Thus the web cam can distinguish this point on the screen from any other point belonging in the presentation. In the frequency range of 10Hz to 100Hz, the web cam can detect the intermittency of the signal but any person looking at the presentation cannot identify that laser beam is pulsing.

Accordingly the web cam detects the modulated laser signal on the distant screen and can determine by this way the location information for the point on the distant screen in any appropriate way.

For example the location information is either transmitted to software integrated in the web cam or in the computer and appropriate calculations are made to determine the exact location of the pointer relative to the presentation.

The computer can then associate the cursor on the computer screen with the signal on the distant screen produced by the input device. Thus the cursor of the computer is displayed on the distant screen. The user can then click on the left or right buttons of the input device to effect an action based on the location of the cursor to ensure that the web cam or the computer detect the laser beam produced by pressing the left hand or right hand buttons, each signal being modulated with a specific pulse width modulation technique. If the click is a left hand click, the laser beam is modulated for example as shown in figure 4 and if the click is a right hand click the laser beam is modulated for example as shown in figure 5. The mark space ration for each button on the input device is chose to be distinct. This is one way of distinguishing each action, however there are many other ways of doing this. For examples:
- a specific pulse-train (e.g. Pulse-code modulation) can be emitted by the laser-pointer to identify each button ;
   - or the pointer could have a secondary illumination source, preferably of a different color(wavelength). This would be enabled to indicate a button press;
   - or the brightness of the laser pointer could be modulated to indicate a button press.

The advantage of a pulse-width modulation scheme is that it simple and therefore cheap to implement in both the laser pointer and also to detect.

The distance between the user and the distant screen is not a known value and may vary from one moment to the next. Each user can be located at any distance from the distant screen. Similarly, the size of the distant screen is not always known in advance. Accordingly a calibration step may be required prior to use. The calibration may adapt the laser output of the input device to the distant screen or the image captured by the web cam. In order to realize this calibration, the software integrated in the web cam or in the computer requires a beam to be transmitted to, for examples, three corners of the distant screen. This will enable vertical and horizontal scaling factors to be determined and used thereafter. In the examples of modulation where mark space ration is not used, the calibration technique may be different.

As the laptop screen and projection screen are not aligned along the same principal axis of the screen there will be some spatial compression of the image and the vertical scaling factor will not necessary be the same as the horizontal scaling factor.

It is common for a user to move around during the presentation. If the person moves closer to or further away, this will have only a minimal effect on the laser spot brightness (the laser being a coherent light source with little beam divergence -> small change in intensity with distance). Even with a small change in brightness, the on-off periods of the pointers pulsing will be readily identifiable. However, the mark-space ratio is independent.

It will be appreciated that the examples presented herein are the only ways of carrying out the invention and variations will be evident to the person skilled in the art.

## Claims

1. An image capture device for detecting a distinctive mark generated by an input device on display medium remote there from, wherein the input device can input a modulation characteristic on the distinctive mark said image capturing device being connected to a processor which carries out an action determined by the distinctive mark,
wherein the image capture device further comprises a detector for detecting the distinctive mark on the display medium and for determining the exact location of the distinctive mark relative to the display medium and for determining the modulation characteristics to determine the action required to be made by the processor.

2. The image capture device of claim 1, further comprising a processing means for displaying data on the display medium and wherein the detector determines the location of the mark relative to the data.

3. The image capture device of claim 1 or claim 2, further comprising a calibrator which can adapt the determination of the exact based to the size of the display and the distance of the display from the input device.

4. The image capture device of any preceding claims,
wherein the distinctive mark generated by the input device is an electromagnetic signal and the detector is an electromagnetic detector.

5. The image capture device of any preceding claims,
wherein the distinctive mark generated by the input device is a laser signal and the detector is a laser detector.

6. The image capture device of any preceding claims,
wherein the image capture device is in a form of a video camera.

7. An input device for producing a mark which includes a modulation characteristic on a remote display said distinctive mark being detectable by an image capture device which is connected to a processor such that the image capture device provide said processor with the exact location of the distinctive mark and details of the modulation characteristics to effect an action on the processor.

8. An input device of claim 7, wherein the mark is modulated with pulse width modulation that indicates the action to be effected by the processor.

9. The input device of claim 7 or claim 8, wherein the input device comprises one or more actuation elements, each producing a different modulation characteristic.

10. The input device of any preceding claims from 7 to 10, wherein the mark is generated as an electromagnetic signal.

11. The input device of claim 10, wherein the electromagnetic signal is a laser signal.

12. A system for presenting data on a remote display comprising an input device according to any of claims 7 to 11 and an image capture device according to any of claims 1 to 6.

13. The system of claim 12, for making presentations to an audience further comprising a processor connected to or integral with the image capture means.

14. The system of claim 13, further including a projector for projecting the presentation.

15. The system of claim 13 or claim 14, further including a remote display medium.

## Amended claims

### Amended claims in accordance with Rule 86(2) EPC.

**1.** An image capture device for detecting a distinctive mark generated by an input device on display medium remote there from, wherein the input device can input a pulse width modulation characteristic on the distinctive mark said image capturing device being connected to a processor which carries out an action determined by the distinctive mark,
wherein the image capture device further comprises a detector for detecting the distinctive mark on the display medium and for determining the exact location of the distinctive mark relative to the display medium and for determining the pulse width modulation characteristics to determine the action required to be made by the processor.

**2.** The image capture device of claim 1, further comprising a processing means for displaying data on the display medium and wherein the detector determines the location of the mark relative to the data.

**3.** The image capture device of claim 1 or claim 2, further comprising a calibrator which can adapt the determination of the exact based to the size of the display and the distance of the display from the input device.

**4.** The image capture device of any preceding claims,
wherein the distinctive mark generated by the input device is an electromagnetic signal and the detector is an electromagnetic detector.

**5.** The image capture device of any preceding claims,
wherein the distinctive mark generated by the input device is a laser signal and the detector is a laser detector.

**6.** The image capture device of any preceding claims,
wherein the image capture device is in a form of a video camera.

**7.** An input device for producing a mark which includes a pulse width modulation characteristic on a remote display said distinctive mark being detectable by an image capture device in accordance with any one of claim 1 to 6 which image capture device is connected to a processor such that the image capture device provides said processor with the exact location of the distinctive mark and details of the pulse width modulation characteristics to effect an action on the processor.

**8.** The input device of claim 7, wherein the input device comprises one or more actuation elements, each producing a different pulse width modulation characteristic.

**9.** The input device of claim 7 or claim 8, wherein the mark is generated as an electromagnetic signal.

**10.** The input device of claim 9, wherein the electromagnetic signal is a laser signal.

**11.** A system for presenting data on a remote display comprising an input device according to any of claims 7 to 10.

**12.** The system of claim 11, further comprising an image capture device according to any of claims 1 to 6.

**13.** The system of claim 12, for making presentations to an audience further comprising a processor connected to or integral with the image capture means.

**14.** The system of claim 12 or claim 13, further including a projector for projecting the presentation.

**15.** The system of any of claims 12 to 14, further including a remote display medium.
